# EUROPÄISCHE PATENTSCHRIFT

(11) **EP 0 324 808 B1**
(45) Veröffentlichungstag und Bekanntmachung des Hinweises auf die Patenterteilung: **17.03.1993**
(21) Anmeldenummer: 88905647.9
(22) Anmeldetag: 07.07.1988
(51) Int. Cl.: H02B 1/04

(54) **ELEKTRISCHES SCHALTGERÄT ZUR BEFESTIGUNG AUF EINE PROFILSCHIENE**
ELECTRIC SWITCHING DEVICE FOR FASTENING TO A PROFILE RAIL
DISPOSITIF D'AIGUILLAGE ELECTRIQUE DESTINE A ETRE FIXE A UN RAIL PROFILE

(30) Priorität: 17.07.1987 CH 2724/87
(43) Veröffentlichungstag der Anmeldung: 26.07.1989
(73) Patentinhaber: Weber AG, CH-6020 Emmenbrücke (CH)
(72) Erfinder: RUSCH, Arthur, CH-6020 Emmenbrücke (CH); MISCHON, Daniel, CH-6206 Neuenkirch (CH)
(74) Vertreter: Lauer, Joachim, Dr.
(86) Internationale Anmeldenummer: CH8800120
(87) Internationale Veröffentlichungsnummer: WO8900781

(56) Entgegenhaltungen:
- EP-A- 0 061 664
- DE-U- 8 712 955
- FR-A- 1 524 627

## Beschreibung

Die Erfindung betrifft ein elektrisches Schaltgerät zur Befestigung auf eine Profilschiene nach dem Oberbegriff des Patentanspruchs 1.

Ein solches elektrisches Schaltgerät ist z.B. bekannt aus EP-A-0184143. Das dort beschriebene Schaltgerät hat eine querrinnenartige Ausnehmung, die über den Tragschienenbereich bis zu einem Gehäuserand hin verbreitert ist. Zwei sich gegenüberstehende Nasen umfassen die Schenkelenden einer Tragschiene, wobei die eine Nase an einem Schieber angeformt ist. Mittels einer Drehfeder oder einer Omegafeder im Gehäuseboden wird ein nach innen gerichteter Druck auf den Schieber ausgeübt. Beim Zurückschieben des Schaltgerätes wird dieser Druck aufgehoben. Das Schaltgerät kann so weit zurückgeschoben werden bis die Sammelschiene die äussere Kontur und Kontaktteile nicht mehr überdeckt.

Der obige Schieber bedarf jedoch einer zusätzlichen Arretiereinrichtung, damit das Schaltgerät beim Anziehen der Kontaktschrauben nicht schräggestellt wird. Gleichzeitig soll die Arretiereinrichtung verhindern, dass das Schaltgerät durch eine unbewusste Manipulation (anschlagen, rütteln oder dergl.) von der Tragschiene lostgelöst wird. Diese Arretiereinrichtung besteht aus einer Wippe oder ist einteilig in Form von Sägezähnen auf dem Schieber angeformt, wobei entsprechende Sägezähne an der Bodenfläche des Schaltgerätes vorgesehen sind. Nachteilig ist dabei, dass die Arretiereinrichtung auf derselben Seite ist, wie die Klemmanschlüsse für die Sammelschiene. Die Arretiereinrichtung wird deshalb von der Tragschiene verdeckt. Dadurch ist es sehr umständlich, die Arretiervorrichtung eines auf der Tragschiene aufgeschnappten Schaltgerätes zu entriegeln.Der Schieber besitzt weiterhin eine Kralle, die den Schenkel einer hutprofilartigen Tragschiene übergreift. Das Schaltgerät kann nur auf hutprofilartige Schienen nach DIN EN 50022 befestigt werden, da die Kralle ein Aufschnappen auf andere Tragschienen nicht zulasst.

Aus der EP-A-0 061 664 ist ein elektrisches Schaltgerät zur Befestigung auf einer Hutprofilschiene bekannt, welches ein Gehäuse mit einer im Gehäuseboden vorgesehenen, rechteckigen Ausnehmung aufweist, die im wesentlichen breiter als die Breite der Profilschiene ist. In dem Gehäuseboden ist ein Befestigungselement verschiebbar angeordnet, welches sich im wesentlichen über den gesamten Gehäuseboden erstreckt. Am Boden des Gehäuses ist eine erste Nase und am Befestigungselement eine dieser gegenüberliegende weitere Nase angeformt. Das Befestigungselement und das Gehäuse sind derart federnd gegeneinander abgestützt, dass das Schaltgerät auf die Profilschiene aufschnappbar ist. Im aufgeschnappten Zustand umgreifen die genannten Nasen die beiden nach aussen vorspringenden Schenkel der Profilschiene von aussen. Bedingt durch die federnde Abstützung des Gehäuses und des Befestigungselements gegeneinander ist einerseits das Befestigungselement im Gehäuseboden und andererseits auch das Gehäuse quer zur Profilschiene verschiebbar.

Die Erfindung stellt sich nun die Aufgabe bei dem elektrischen Schaltgerät der vorerwähnten Art, eine verbesserte Befestigung auf eine normierte und/oder handelsübliche Profilschiene zu erreichen. Gleichzeitig soll eine gut zugängliche Verriegelung des Befestigungselementes erwirkt werden.

Diese Aufgabe wird bei einem elektrischen Schaltgerät der oben genannten Art gelöst durch die Merkmale des Patentanspruchs 1.

Die Erfindung hat den grossen Vorteil, dass die Befestigung von aneinander gereihten Schaltgeräten auf allen üblichen Profilschienen gewährleistet ist. Gleichzeitig kann jedes einzelne Schaltgerät besonders einfach von der Sammelschiene und von der Profilschiene weggeschoben werden. Das Befestigungselement kann wegen der einfachen Konstruktion mit einen U-förmigen Federbügel oder eine kulissenartigen Blattfeder nachträglich an das verschraubte oder vernietete Schaltgerät angebracht werden. Das Schaltgerät ist in Längs- und in Querrichtung sehr stabil auf der Profilschiene befestigt. Dies ist vorallem beim Ausrichten von Schaltgeräten auf der Profilschiene besonders wichtig. Ein anderer wichtiger Vorteil ist, dass die Verriegelung sich auf der Seite des Schaltgerätes befindet, die gegenüber der Sammelschiene liegt. Somit ist gewährleistet, dass die Verriegelung gut zugänglich ist und beim Montieren auf der Sammelschiene nicht ungewollt entriegelt werden kann.

Weitere Vorteile der Erfindung ergeben sich aus der nachstehenden Beschreibung. Dort wird die Erfindung anhand eines in der Zeichnung dargestellten Ausführungsbeispieles näher erläutert.

Dabei zeigt:
- Fig. 1 a: die seitliche Kontur eines Schaltgerätes mit einem verriegelten Befestigungselement,
- Fig. 2 a: einen Schnitt längs der Linie A-A in Fig. 1 a.

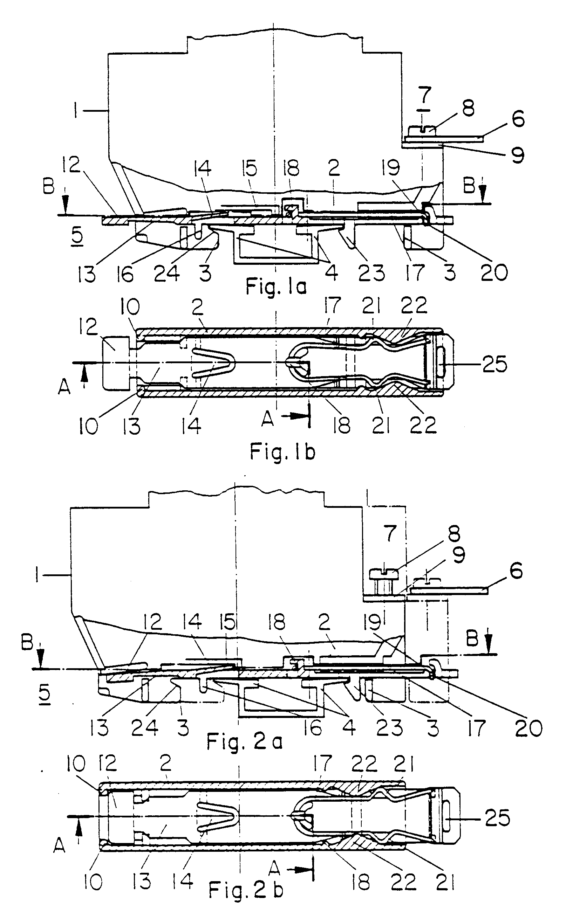

- Fig. 1 b und 2 b: dasselbe Schaltgerät wie in Fig. 1 a und 2 a in entriegeltem Zustand,

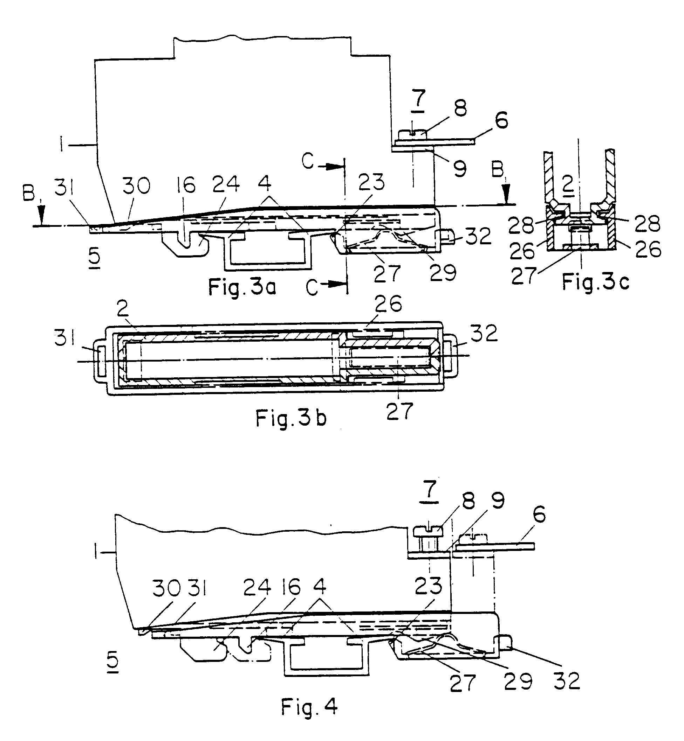

- Fig. 3 a: die seitliche Kontur eines Schaltgerätes mit einem anderen, verriegelten Befestigungselement,
- Fig. 3 b: einen Schnitt längs der Linie B-B in Fig. 3 a,
- Fig. 3 c: einen Teil eines Schnittes längs der Linie C-C in Fig. 3 a,
- Fig. 4: dasselbe Schaltgerät wie in Fig. 3 a in entriegelten Zustand,

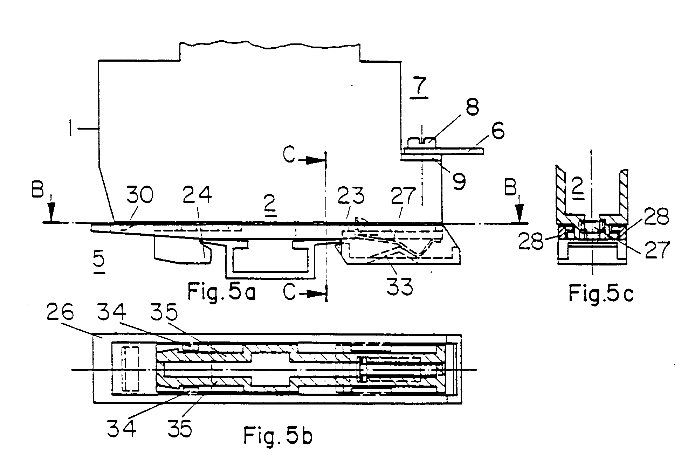

- Fig. 5 a: die seitliche Kontur eines Schaltgerätes mit einem dritten, verriegelten Befestigungselement,
- Fig. 5 b: einen Schnitt längs der Linie B-B in Fig. 5 a,
- Fig. 5 c: einen Teil eines Schnittes längs der Linie C-C in Fig. 5 a

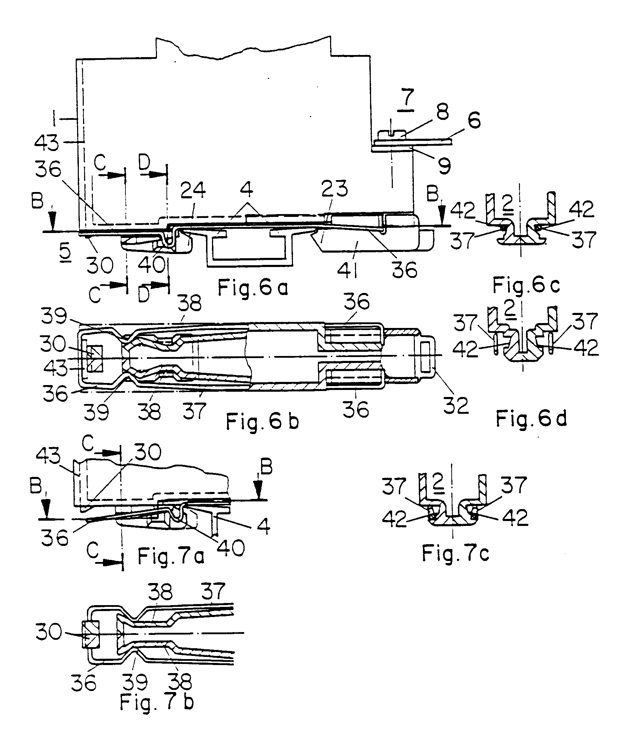

- Fig. 6 a: die seitliche Kontur eines Schaltgerätes mit einem vierten, verriegelten Befestigungselement,
- Fig. 6 b: einen Schnitt längs der Linie B-B in Fig. 6 a,
- Fig. 6 c: einen Schnitt längs der Linie C-C in Fig. 6 a,
- Fig. 6 d: einen Schnitt längs der Linie D-D in Fig. 6 a,
- Fig. 7 a: eine Teilkontur des Schaltgerätes wie in Fig. 6 a in entriegeltem Zustand,
- Fig. 7 b: einen Schnitt längs der Linie B-B in Fig. 7 a,
- Fig. 7 c: einen Schnitt längs der Linie C-C in Fig. 7 a,

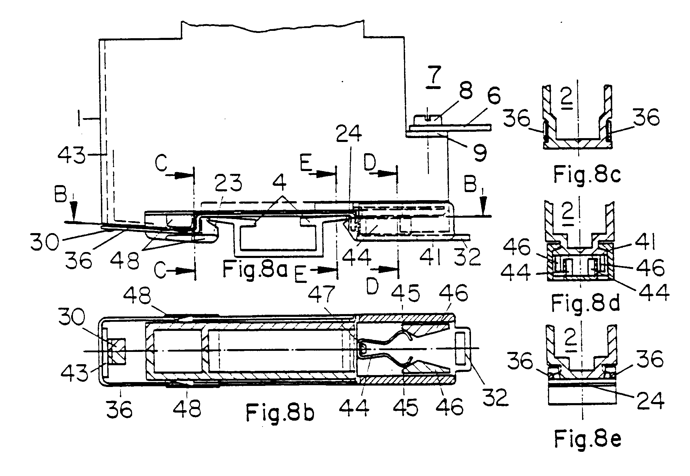

- Fig. 8 a: eine Kontur eines Schaltgerätes mit einem fünften, verriegelten Befestigungselement,
- Fig. 8 b: einen Schnitt längs der Linie B-B in Fig. 8 a,
- Fig. 8 c: einen Schnitt längs der Linie C-C in Fig. 8 a,
- Fig. 8 d: einem Schnitt längs der Linie D-D in Fig. 8 a, und
- Fig. 8 e: einen Schnitt längs der Linie E-E in Fig. 8 a.

In den Figuren werden für dieselben Elemente stets dieselben Bezugsziffern verwendet.

In Fig. 1 a ist die Kontur eines Schaltgerätes 1 angedeutet. Im Gehäuseboden 2 ist eine breite Ausnehmung 3 vorgesehen, die wesentlich breiter ist als die Breite einer Profilschiene 4, worauf das Schaltgerät mit einem im Gehäuseboden verschiebbaren Befestigungselement 5 aufgeschnappt ist. Die Profilschiene 4 ist hutprofilartig und handelsüblich erhältlich. Die hier dargestellte Profilschiene 4 hat eine Kombination eines Hut- und eines C-Profils, und besteht aus Aluminium.Eine Sammelschiene 6 ist an einem Klemmenanschluss 7 angeschraubt, der aus einer Schraube 8 und einem Anschlussstück 9 besteht. Das Befestigungselement 5 weist an seinem linken Ende eine Verriegelung auf, die von dem als breiten Ansatz 12 ausgebildeten Ende des Befestigungselementes 5 geformt wird. Der breite Ansatz 12 ist mit einem stufenförmig, nach links verjüngten Teil 13 des Befestigungselementes 5 verbunden, wie aus Fig. 1 b deutlich ersichtbar ist. Der Gehäuseboden 2 ist in diesem Bereich mit Bodennocken 10 entsprechend verjüngt, so dass der breite Ansatz 12 ein ungewolltes Verschieben des Befestigungselementes 5 verhindert. Eine kleine Zunge 14 befindet sich im Befestigungselement 5 etwa oberhalb des linken Schenkels der Profilschiene 4. Die Zunge 14 weist leicht nach oben und verhindert aufgrund eines Anschlages 15 im Gehäuseboden 2, dass das Befestigungselement 5 zu weit nach rechts verschoben werden kann. Links der Profilschiene 4 ist unten am Befestigungselement 5 ein Vorsprung 16 vorgesehen, der beim Entriegeln des Schaltgerätes 1 gegen die Profilschiene 4 anschlägt. Auf dem rechten Teil des Befestigungselementes 5 ist ein U-förmiger Federbügel 17 angebracht. Oberhalb des rechten Schenkels der Profilschiene 4 ist auf dem Befestigungselement 5 eine Kralle 18 angeordnet, die den Mittelteil des Federbügels 17 umgreift. Am rechten Endes des Befestigungselementes 5 befinden sich im Randbereich zwei kleine Oeffnungen 19, in denen die nach unten gebogenen Enden 20 des Federbügels 17 eingehakt sind. Die beiden Schenkel des Federbügels 17 sind mit nach aussen stehenden Kulissen 21 ausgebildet, wie aus Fig. 1 b ersichtlich ist. Im Gehäuseboden 2 sind gegenläufige, nach innen stehende Kulissen 22 vorgesehen, gegen welche die Kulissen 21 des Federbügels 17 drücken (Fig. 1 b). Rechts der Profilschiene 4 ist am Befestigungselement 5 eine Nase 23 angebracht, die den rechten Schenkel der Profilschiene 4 umgreift. Auf der linken Seite der Ausnehmung 3 im Gehäuseboden 2 ist ebenfalls eine Nase 24 vorgesehen, die den linken Schenkel der Profilschiene 4 umgreift. Das rechte Ende des Befestigungselementes 5 ist mit einem umschlossenen Schlitz 25 versehen (Fig. 1 b), worin ein Schraubenzieher zum Verschieben des Befestigungselementes 5 gesteckt werden kann.

In den Figuren 2 a und 2 b ist das Befestigungselement 5 entriegelt worden. Dazu wird der breite Ansatz 12 nach unten gedrückt und das Schaltgerät 1 nach links verschoben. Die Sammelschiene 6 ist daher frei geworden - strichliert angedeutet - in Fig. 2b und das Schaltgerät 1 kann um den rechten Schenkel der Profilschiene 4 weggedreht und/oder nach oben von der Sammelschiene 6 entfernt werden. Anstatt eines Anschlusses mit einer Sammelschiene 6 kann das Schaltgerät 1 auch normal verdrahtet sein. In diesem Fall wird das Befestigungselement 5 vorteilhafterweise mit einem Schraubenzieher im Schlitz 25 verschoben, bis der breite Ansatz 12 ansteht. Diese geringe Verschiebung reicht dann aus, um das Schaltgerät 1 von der Profilschiene 4 zu entfernen.

In den Figuren 3 a, 3 b, 3 c und 4 ist andeutungsweise ein Schaltgerät 1 mit einem Befestigungselement 5 gezeigt, des im wesentlichen aus einem Rahmen 26 und einer buckelförmigen Blattfeder 27 besteht. Der Rahmen 26 hat die Form eines flachen Keiles und ist an seinem oberen Rand mit nach innen stehenden Rippen 28 versehen. Der Gehäuseboden 2 weist ein T-Profil auf, so dass der Rahmen 26 von den Rippen 28 geführt und gelagert ist. Der Rahmen 26 besitzt rechts der Profilschiene 4 eine Nase 23, die den rechten Schenkel der Profilschiene 4 umgreift. Rechts davon ist die Blattfeder 27, mit ihrem nach oben weisenden Buckel unten in den Rahmen 26 eingeklemmt. Oberhalb der Blattfeder 27 ist am Gehäuseboden 2 eine nach unten stehende Kulisse 29 vorgesehen, gegen welche die Blattfeder 27 drückt. Am linken Rand das Gehäusebodens 2 ist ein Verriegelungsnocken 30 angebracht. Am rechten und linken Rand des Befestigungselementes 5 ist jeweils eine Oese 31, 32 vorgesehen mit einem schlitzförmigen Sackloch, in welches ein Schraubenzieher eingesteckt werden kann.

In den Figuren 5 a, 5 b und 5 c ist andeutungsweise ein Schaltgerät 1 gezeigt mit einem Befestigungselement 5, ähnlich wie vorher aber mit dem Unterschied, dass die buckelförmige Blattfeder 27 im Gehäuseboden 2 eingeklemmt ist und der Buckel nach unten weist. Rechts der Nase 23 ist der Rahmen 26 unten geschlossen. Auf diesem Boden ist eine nach oben stehende Kulisse 33 angeordnet. Oberhalb des linken Schenkels der Profilschiene 4 sind am Rahmen 26 nach innen stehende Nocken 34 vorgesehen, die innerhalb einer rechteckigen Kontur 35 des Gehäusebodens 2 verschoben werden können. Dadurch kann das Befestigungselement 5 nur beschrankt längs des Gehäusebodens 2 verschoben werden.

In den Figuren 6 a, 6 b, 6 c und 6 d ist andeutungsweise ein Schaltgerät 1 dargestellt mit einer vierten Variante des Befestigungselementes 5 in verriegeltem Zustand. Die Figuren 7 a, 7 b und 7 c zeigen im wesentlichen den entriegelten Zustand des Befestigungselementes 5. Die Kontur 37 des Gehäusebodens 2 (fig. 6 b) hat die Form eines langgestreckten Ovales mit links zwei gegenüberliegenden Einbuchtungen 38. Im unteren Bereich erstrecken sich die Einbuchtungen 38 nach links und sind mit zwei nach aussen stehenden Flanken versehen ( Fig. 7 b ). Ein Drahtbügel 36 bildet mit einem Schiffchen 41, das links die Nase 23 besitzt, das Befestigungselement 5. Der Drahtbügel 36 hat in der horizontalen Ebene (fig. 6 b) zwei nach innen stehende Kulissen 39 und in der vertikalen Ebene (Fig. 6 a) zwei schlaufenförmige Anschläge 40. Aus den Figuren 6 c und 6 d ist ersichtlich, dass der Gehäuseboden 2 den Drahtbügel 36 in einer Rinne 42 führt, die gemäss der Kontur 37 verläuft. Am linken Rand des Gehäusebodens 2 ist wiederum ein Nocken 30 vorgesehen, mit dem der Drahtbügel 36 verriegelt ist. Eine viereckige Ausnehmung 43 über die gesamte linke Schmalseite des Schaltergerätes 1 (strichliert in Fig. 6 a; Fig. 6 b) ermöglicht das Befestigungselement 5 mittels eines Schraubenziehers zu entriegeln (vgl. Fig. 7 a, 7 b, 7 c). Die Funktionsweise dieses vierten Befestigungselementes 5 ist ähnlich wie bei den übrigen Varianten. Wird der Drahtbügel 36 nach unten gedrückt, so werden die Kulissen 39 über Anschrägungen im Gehäuseboden 2 auf die Flanken der Einbuchtungen 38 geführt. Der Entriegelungsvorgang wird daher schon beim Niederdrücken des Drahtbügels 36 automatisch ausgelöst.

In Fig. 8 a, 8 b, 8 c, 8 d und 8 e ist andeutungsweise ein Schaltgerät 1 mit einer fünften Variante des Befestigungselementes 5 in verriegeltem Zustand dargestellt. Im Gegensatz zum obigen (vierten) Befestigungselement 5 ist nun eine spangenförmig Blattfeder 44 in dem Schiffchen 41 untergebracht. Die nach aussen stehenden, gebogenen Feder-Enden 45 drücken gegen nach innen stehende Kulissen 46 des Gehäusebodens 2 (Fig. 8 b). Die Blattfeder 44 ist mit ihrer Schulter zwischen der Nase 24 und einem Stift 47 des Schiffchens 41 eingeklemmt. Der Drahtbügel 36 hat nun die Form eines Rechtecks und ist links von der Profilschiene 4 nach unten Z-förmig gebogen. Das Ende des Drahtbügels 36 ist nach unten abgewinkelt und in Bohrungen des Schiffchens 41 eingesteckt. Im Bereich der Z-Form ist der Drahtbügel 36 oben und unten von zwei nach aussen stehenden Führungsnocken 48 des Gehäusebodens 2 geführt.

Es versteht sich, dass im Rahmen der oben offenbarten Befestigungselemente noch andere Varianten möglich sind.

## Patentansprüche

1. Elektrisches Schaltgerät (1) zur Befestigung auf einer Profilschiene (4) mit Hutprofil,
- wobei das Schaltgerät ein Gehäuse mit einer im Gehäuseboden (2) vorgesehenen, rechteckigen Ausnehmung (3) aufweist, die im wesentlichen breiter als die Breite der Profilschiene (4) ist,
- wobei in dem Gehäuseboden (2) ein Befestigungselement (5) verschiebbar angeordnet ist,
- wobei auf einer Seite des Gehäuses ein Klemmanschluss (7) zum Anschluss an eine Sammelschiene (6) vorgesehen ist,
- wobei am Boden (2) des Gehäuses eine erste Nase (24) und am Befestigungselement (5) eine dieser gegenüberliegende, auf der gleichen Seite wie der genannte Klemmanschluss (7) angeordnete weitere Nase (23) angeformt ist,
- wobei das Befestigungselement (5) und das Gehäuse derart federnd gegeneinander abgestützt sind, dass das Schaltgerät (1) auf die Profilschiene (4) aufschnappbar ist,
- wobei die genannten Nasen (23,24) im aufgeschnappten Zustand die beiden nach aussen vorspringenden Schenkel der Profilschiene (4) von aussen umgreifen,
- wobei das Befestigungselement (5) im Gehäuseboden (2) und damit auch das Gehäuse zumindest soweit quer zur Profilschiene (4) verschiebbar ist, dass die Schaltvorrichtung unbehindert durch die Sammelschiene (6) auf der Profilschiene montierbar oder von dieser abnehmbar ist, und
- wobei eine Verriegelung (10, 12) des Befestigungselements (5) im Gehäuse vorgesehen ist,
dadurch gekennzeichnet, dass
- sich das Befestigungselement (5) über den gesamten Gehäuseboden (2) erstreckt
- dass das Befestigungselement (5) zumindest dann auf der dem Klemmanschluss (7) gegenüberliegenden Seite mit einem Ende über das Gehäuse übersteht, wenn das Schaltgerät (1) auf die Profilschiene (4) aufgesetzt und das Gehäuse auf dieser so positioniert ist, dass die Klemmvorrichtung (7) an die Sammelschiene (6) anschliessbar ist, und
- dass die Verriegelung (10,12) des Befestigungselements (5) im Gehäuse so ausgebildet ist, dass sie durch Drücken auf das über das Gehäuse überstehende Ende des Befestigungselements entriegelbar ist.

2. Elektrisches Schaltgerät (1) nach Anspruch 1, **dadurch gekennzeichnet, dass** das Befestigungselement (5) einen U-förmigen Federbügel (17) aufweist, dessen beide Schenkel je eine laterale Kulisse (21) aufweisen, und dass im Gehäuseboden (2) entsprechend gegenläufige Kulissen (22) vorgesehen sind, so dass die Federkraft abhängig von der Position des Befestigungselementes (5) ihre Richtung ändert.

3. Elektrisches Schaltgerät (1) nach Anspruch 1, **dadurch gekennzeichnet, dass** das andere Ende des Befestigungselementes (5) längs mit einer Blattfeder (27) versehen ist, die eine laterale Kulisse aufweist, und dass im Gehäuseboden (2) eine gegenläufige Kulisse (29) vorgesehen ist, so dass die Federkraft abhängig von der Position des Befestigungselementes (5) ihre Richtung ändert.

4. Elektrisches Schaltgerät nach Anspruch 1, **dadurch gekennzeichnet, dass** längs im Gehäuseboden (2) eine Blattfeder (27) vorgesehen ist, die eine laterale Kulisse aufweist, und dass das andere Ende des Befestigungselementes (5) eine gegenläufige Kulisse (33) aufweist, so dass die Federkraft abhängig von der Position des Befestigungselementes (5) ihre Richtung ändert.

5. Elektrisches Schaltgerät nach Anspruch 2, **dadurch gekennzeichnet, dass** das Befestigungselement (5) aus einem über den gesamten Gehäuseboden sich erstreckenden Kunststoffteil besteht, und dass der U-förmige Federbügel (17) etwa die halbe Bodenlänge aufweist und oberhalb der Nase (23) des Befestigungselementes (5) angeordnet ist.

6. Elektrisches Schaltgerät nach Anspruch 2, **dadurch gekennzeichnet, dass** das Befestigungselement (5) aus einem Kunststoffteil (41) und einem etwa über den gesamten Gehäuseboden (2) sich erstreckenden U-förmigen Drahtbügel (36) besteht, der den Gehäuseboden (2) im unteren Bereich umgreift, wobei das Kunststoffteil (41) im wesentlichen die Nase (23) bildet, und der U-förmige Drahtbügel (36) an den offenen Enden nach innen gebogen ist, so dass der Federbügel in entsprechende Oeffnungen (19) des Kunststoffteils hineingreift.

7. Elektrisches Schaltgerät nach einem der vorangehenden Ansprüchen, **dadurch gekennzeichnet, dass** am Befestigungselement (5) gegenüber der Nase (23) ein Vorsprung (16; 40) vorgesehen ist, derart, dass der Abstand zwischen der Nase (23) und dem Vorsprung (16; 40) etwas grösser als die Breite der Profilschiene (4) ist.

8. Elektrisches Schaltgerät nach Anspruch 6, **dadurch gekennzeichnet, dass** der Drahtbügel (36) in Schulternähe zwei nach innen stehende Kulissen (39) aufweist, und dass der Gehäuseboden (2) die Form eines langgestreckten Ovales besitzt und zwei sich gegenüberliegende Einbuchtungen (38) für die Kulissen (39) aufweist, wobei die Einbuchtungen (38) im unteren Bereich sich zur Führung der Kulissen (39) zum Gehäuserand erstrecken, und je mit einer nach aussen stehenden Flanke versehen sind.

## Claims

1. Electric switching device (1) for fixing to a profile rail (4) having a hat profile, in which the switching device has a casing with a rectangular recess (3) provided in the casing bottom (2) and which is significantly wider than the width of the profile rail (4), in which a fastening element (5) is displaceably located in the casing bottom (2), in which on one side of the casing is provided a clamping connection (7) for connection to a bus-bar (6), in which on the bottom (2) of the casing is shaped a first nose (24) and on the fastening element (5) a further nose (23) facing the first-mentioned nose and positioned on the same side as said clamping connection (7), in which the fastening element (5) and the casing are so resiliently supported against one another that the switching device (1) can be snapped onto the profile rail (4), in which said noses (23, 24), in the snapped-on state, externally embrace the two outwardly projecting legs of the profile rail (4), in which the fastening element (5) in the casing bottom (2) and therefore also the casing is at least displaceable to such an extent transversely to the profile rail (4) that the switching device can be fitted on or removed from the profile rail unhindered by the bus-bar (6) and in which a locking means (10, 12) for the fastening element (5) is provided in the casing, characterized in that the fastening element (5) extends over the entire casing bottom (2), that at least on the side opposite to the clamping connection (7), the fastening element (5) projects with one end over the casing, if the switching device (1) is mounted on the profile rail (4) and the casing is so positioned thereon that the clamping device (7) can be connected to the bus-bar (6) and that the locking means (10, 12) of the fastening element (5) in the casing is so constructed that it can be unlocked by pressing on the fastening element end projecting over the casing.

2. Electric switching device (1) according to claim 1, characterized in that the fastening element (5) has a U-shaped spring clip (17), whose two legs have in each case a lateral link (21) and that corresponding oppositely directed links (22) are provided in the casing bottom (2), so that the spring tension changes its direction as a function of the position of the fastening element (5).

3. Electric switching device according to claim 1, characterized in that the other end of the fastening element (5) is longitudinally provided with a leafspring (27), which has a lateral link and that in the casing bottom (2) is provided an oppositely directed link (28), so that the spring tension changes its direction as a function of the positioning of the fastening element (5).

4. Electric switching device according to claim 1, characterized in that a leafspring (27) is longitudinally provided in the casing bottom (2) and has a lateral link and that the other end of the fastening element (5) has an oppositely directed link (33), so that the spring tension changes its direction as a function of the position of the fastening element (5).

5. Electric switching device according to claim 2, characterized in that the fastening element (5) comprises a plastic part extending over the entire casing bottom and that the U-shaped spring clip (17) has roughly half the bottom length and is positioned above the nose (23) of the fastening element (5).

6. Electric switching device according to claim 2, characterized in that the fastening element (5) comprises a plastic part (41) and a U-shaped wire strap (36) extending over the entire casing bottom (2) and which surrounds the latter in the lower area, the plastic part (41) substantially forming the nose (23) and the open ends of the U-shaped wire strap (36) are bent inwards, so that the spring clip engages in the corresponding openings (19) of the plastic part.

7. Electric switching device according to one of the preceding claims, characterized in that a projection (16, 40) is provided facing the nose (23) on the fastening element (5), so that the spacing between the nose (23) and the projection (16, 40) is somewhat larger than the width of the profile rail (4).

8. Electric switching device according to claim 6, characterized in that the wire strap (36) has in the vicinity of the shoulder two inwardly projecting links (39) and that the casing bottom (2) is shaped like an elongated oval and has two opposite indentations (38) for the links (39), the indentations (38) in the lower region extending up to the casing edge for guiding the links (39) and each is provided with an outwardly projecting flank.

## Revendications

1. Dispositif de coupure électrique (1) destiné à être fixé sur un rail profilé (4) possédant un profil en forme de chapeau, dans lequel
- le dispositif de coupure possède un boîtier comportant un évidement rectangulaire (3), qui est prévu dans le fond (2) du boîtier et est d'une largeur essentiellement supérieure à celle du rail profilé (4),
- un élément de fixation (5) est monté de manière à être déplaçable dans le fond (2) du boîtier,
- une borne de fixation par serrage (7) est prévue d'un côté du boîtier pour le raccordement à une barre omnibus (6),
- un premier bec (24) est formé sur le fond (2) du boîtier et un autre bec (23), situé à l'opposé du premier bec et disposé sur le même côté que ladite borne de fixation par serrage (7), est formé sur l'élément de fixation (5),
- l'élément de fixation (5) et le boîtier s'appuient l'un sur l'autre élastiquement de telle sorte que le dispositif de coupure (1) peut être encliqueté sur le rail profilé (4),
- à l'état encliqueté, lesdits becs (23,24) s'engagent extérieurement autour des deux branches, qui font saillie extérieurement, du rail profilé (4),
- l'élément de fixation (5) disposé dans le fond (2) du boîtier et par conséquent également le boîtier sont déplaçables transversalement au rail profilé (4) au moins au point que le dispositif de coupure puisse être librement monté sur le rail profilé au moyen de la barre omnibus (6) ou puisse être retiré librement de ce rail, et
- un verrouillage (10,12) de l'élément de fixation (5) est prévu dans le boîtier,
caractérisé en ce que
- l'élément de fixation (5) s'étend sur l'ensemble du fond (2) du boîtier,
- sur le côté situé à l'opposé de la borne de fixation par serrage (7), l'élément de fixation (5) fait saillie par une extrémité, par rapport au boîtier lorsque le dispositif de coupure (1) est placé sur le rail profilé (4) et que le boîtier est positionné sur ce rail de telle sorte que le dispositif de serrage (7) peut être raccordé à la barre omnibus (6), et
- que le système de verrouillage (10,12) de l'élément de fixation (5) dans le boîtier est agencé de manière à pouvoir être déverrouillé par application d'une pression à l'extrémité, qui fait saillie au-delà du boîtier, de l'élément de fixation.

2. Dispositif de coupure électrique (1) selon la revendication 1, caractérisé en ce que l'élément de fixation (5) possède un étrier-ressort en forme de U (17), dont les deux branches possèdent chacune une coulisse latérale (21), et que dans le fond (2) du boîtier il est prévu des coulisses opposées correspondantes (22) de sorte que la direction de la force du ressort varie en fonction de la position de l'élément de fixation (5).

3. Dispositif de coupure électrique (1) selon la revendication 1, caractérisé en ce que l'autre extrémité de l'élément de fixation (5) est équipée longitudinalement d'un ressort à lame (27) qui possède une coulisse latérale, et que dans le fond (2) du boîtier il est prévu une coulisse opposée (29) de sorte que la direction de la force du ressort varie indépendamment de la position de l'élément de fixation (5).

4. Dispositif de coupure électrique (1) selon la revendication 1, caractérisé en ce que dans le fond (2) du boîtier est prévu, longitudinalement, un ressort à lame (27), qui possède une coulisse latérale, et que l'autre extrémité de l'élément de fixation (5) possède une coulisse opposée (33) de sorte que la direction de la force du ressort varie en fonction de la position de l'élément de fixation (5).

5. Dispositif de coupure électrique (1) selon la revendication 2, caractérisé en ce que l'élément de fixation (5) est constitué par une pièce en matière plastique qui s'étend sur l'ensemble du fond du boîtier, et que l'étrier-ressort en forme de U (17) possède une longueur égale approximativement à la moitié de la longueur du fond et est disposé au-dessus du bec (23) de l'élément de fixation (5).

6. Dispositif de coupure électrique (1) selon la revendication 2, caractérisé en ce que l'élément de fixation (5) est constitué par une pièce en matière plastique (41) et par un étrier en forme de fil en U (36), qui s étend sur la totalité du fond (2) du boîtier et entoure le fond (2) du boîtier au niveau de sa partie inférieure, la pièce en matière plastique (41) formant essentiellement le bec (23), tandis que l'étrier en forme de fil en U (36) est replié vers l'intérieur au niveau des extrémités ouvertes de sorte que l'étrier-ressort s'engage dans des ouvertures correspondantes (19) de la pièce en matière plastique.

7. Dispositif de coupure électrique (1) selon l'une des revendications précédentes, caractérisé en ce qu'une partie saillante (16;40) est prévue sur l'élément de fixation (5) en vis-à-vis du bec (23) de sorte que la distance entre le bec (23) et la partie saillante (16;40) est légèrement supérieure à la largeur du rail profilé (4).

8. Dispositif de coupure électrique (1) selon la revendication 6, caractérisé en ce que l'étrier formé d'un fil (36) possède, à proximité de l'épaulement, deux coulisses (39) qui font saillie intérieurement, et que le fond (2) du boîtier possède la forme d'un ovale allongé et comporte deux renfoncements opposés (38) pour les coulisses (39), les renfoncements (38) s'étendant dans la partie inférieure pour le guidage des coulisses (39) par rapport à la paroi du boîtier et comportent chacun un flanc tourné vers l'extérieur.
